Europäisches Patentamt

European Patent Office

Office européen des brevets

(19)

(11) Publication number: **0 062 958**
A1

# EUROPEAN PATENT APPLICATION

(21) Application number: 82200440.4

(22) Date of filing: 08.04.82

(51) Int. Cl.³: **B 65 D 71/00**
**B 65 D 1/34**

(30) Priority: 14.04.81 NL 8101845

(43) Date of publication of application:
20.10.82 Bulletin 82/42

(84) Designated Contracting States:
AT BE CH DE FR GB IT LI LU NL SE

(71) Applicant: WAVIN B.V.
251 Händellaan
NL-8031 EM Zwolle(NL)

(72) Inventor: Benraad, Coenraad Johannes B.M.
19 Rheezerend
NL-7701 BC Dedemsvaart(NL)

(72) Inventor: Ettema, Ernst
9 Elzenlaan
NL-7771 DJ Hardenberg(NL)

(74) Representative: Keijser, Johannes Maurits L. F. et al,
EXTERPATENT 3 & 4, Willem Witsenplein
NL-2596 BK The Hague(NL)

(54) Tray, adapted for packing articles.

(57) An injection moulded tray of substantially rectangular shape, having an apertured bottom consisting of crossing webs, and a frame with waved obliquely outwardly extending walls. According to the invention the crossing webs (2) of the bottom reach the frame shaped part (1) at the location (2') substantially opposite an inwardly directed tip (6) of the waves in the circumferential wall (3).

This enables a mould and a method of injecting material in the mould substantially at these locations where the bottom webs are connected with the frame shaped part.

An advantageous embodiment of the tray has webs (7) extending radially upwardly from a central part (5) and being interconnected with circular webs (17). Most of these webs again reach the circumferential frame opposite inwardly directed tips of the waves, but this embodiment particularly enables to inject at the location of the central bottom part (5).

EP 0 062 958 A1

Croydon Printing Company Ltd

Tray, adapted for packing articles.

The invention relates to a tray, adapted for packing articles, and manufactured as an injection moulding product, said tray being substantially rectangular, having an apertured bottom, and having upstanding circumferential walls extending obliquely outwardly and being waved, the upstanding circumferential walls being provided with an upwardly directed flange aligned with the waved top edge of the wall.

These trays are used in such manner that the entirety of the articles arranged on a single tray or between two similar trays is surrounded by shrinking foil. This type of package can be used for packing articles of various nature, such as tins, and glass jars, but on the other hand also, for example, books.

As far as trays have closed bottoms, other manufacturing techniques can be considered. For the type referred to here, having an apertured bottom, e.g. with a plurality of crossing webs of material, having a small width, which maintain a connection but which, in total, don't occupy more than a minor fraction of the bottom surface, the art of injection moulding can be applied.

For injection moulding in an economic way the total production time for each part sould be short. On the other hand the shape of the article produced should meet certain standards with great accuracy. These standards always comprise narrow limits on acceptable tolerances in length and width, and moreover the product should be flat within narrow limits. These two criteria can be strongly influenced by means of the cycle time and more particularly the cooling time. When the cooling time is chosen to be long, it is possible to adapt the cooling of the mould to the place which requires the longest time to discharge the amount of heat of the plastic material accumulated during injecting. In this way one may obtain that, at the moment of removal from the mould, the product has almost at all places reached the surrounding temperature, so that one need only reckon with a minimum of final shrinkage, such final shrinkage in this case being moreover equal everywhere. In this way the product is defined completely. This, however, is in conflict with the economic requirement of a short production time. As soon as the cooling is selected to be shorter, problems arise, because the whole product or certain parts thereof, has or have not been completely cooled. The result is that, after removal from the mould, the product will continue to cool, and therefor starts to shrink. In practice it is virtually impossible to obtain that cooling outside the mould occurs perfectly uniformly. Also the course of shrinking in time will be irregular, so that in the end the product will warp or become non-flat. The problems are still more serious when the cooling in the mould has been irregular already.

The invention aims at meeting these problems.

The tray according to the invention is characterized in that the crossing webs of material which, together with the frame shaped part at the circumference, constitute the bottom, end up in said frame shaped part substantially opposite inwardly directed tips of the wave of the wavy circumferential wall.

This enables a method of manufacturing this tray as an injection moulding product , which is characterized in that the injecting is being done in the bottom substantially at the locations where the bottom webs are connected with the frame shaped bottom part.

It has turned out that in this way a very fast and uniform flow of the plastic material in the mould occurs towards all places of the tray to be manufactured. Thereby also the temperature is distributed regularly, so that local peaks in the temperature are absent and the possibility is obtained to also realise the cooling uniformly and fast.

The inventive idea defined so far is realisable with trays having in the bottom, in known manner, a plurality of webs of material which cross each other perpendicularly and which all extend parallel to the longer and the shorter sides, respectively, of the rectangular shape of the tray as a whole.

A special advantage can be obtained, however, when the basic idea of the invention as far as the tray design is concerned, is implemented in this way that the webs of material in the bottom consist of a plurality of webs extending radially outwardly from a central part, ending in the frame shaped part substantially opposite inwardly directed tips of the waves of the wavy circumferential wall, as well as of a few webs ending in the corners, the radially extending webs being interconnected by circular webs ending also, as far as they reach the frame shaped part, substantially opposite inwardly directed tips of the waves of the wavy circumferential wall.

This tray design makes possible a method of manufacturing which is characterized in that the injecting is being done at the location of the central part where the radially outwardly extending webs meet.

Also here the correct injection is obtained with the uniform course of temperature in the mould, and the possibility of fast and uniform cooling. As an additional advantage it may be noted that the mould need not posses complicated flow channels because one need only inject on one single place. This also means that, at changes in production, the mould can be exchanged quickly.

The invention also comprises the moulds adapted for manufacturing the said trays, particularly with the methods as mentioned above.

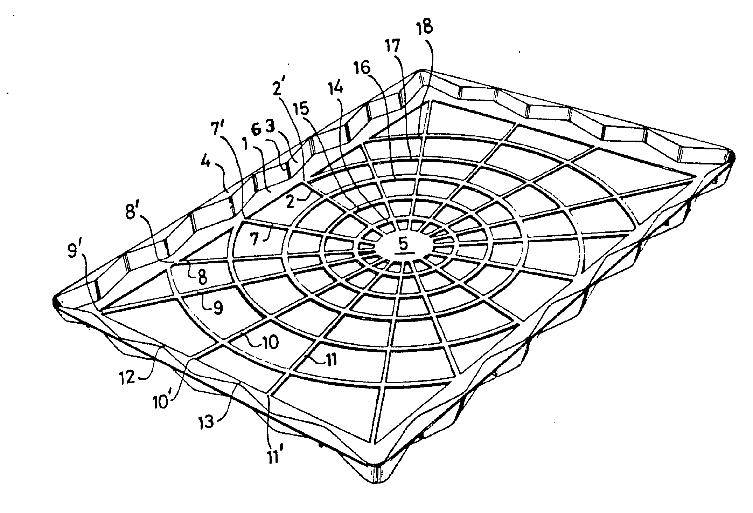

The invention will hereinafter be clarified with reference to the accompanying drawing of an embodiment of the tray. The single figure shows perspectively a tray in the embodiment having bottom webs which extend radially outwardly from a central part.

This tray comprises a substantially rectangular frame 1 within which a network of crossing webs of material such as 2 is situated.

At all four sides an obliquely outwardly extending wall 3 joins the bottom 1,2. This outer wall is waved. The top edge of the wall 3 merges into an outwardly directed flange 4 lying in a horizontal plane, i.e. parallel to the plane of the bottom.

The network of webs of material constituting the plane of the bottom, comprises a part 5 which is centrally situated, i.e. at the crossing of the diagonals of the rectangular shape of the bottom frame 1. From this part 5 a plurality of webs extend radially outwardly. It is visible that for example the web indicated by 2 reaches the frame 1 at a location situated substantially opposite an inwardly directed tip 6 of the wave in the upstanding wall 3. The same holds for the webs 7 and 8. The web 9 is an exception to the rule in so far that it goes to the corner where there is no such inwardly directed wave tip. Along the shorter side the rule holds again: the radially extending webs 10 and 11 arrive at the places 10' and 11', respectively, substantially opposite the inwardly directed wave tips 12 and 13, respectively.

The mutual connection between the radially outwardly extending webs is constituted by a plurality of circular webs. The innermost webs 14, 15, 16 of this type are simply closed circles (although the circular shape as such is as a matter of course not essential, a different course may also be chosen). To the outside there are two more of these webs 17 and 18, respectively, which join the frame 1 at the same places such as 7' and 8', respectively, as the radially extending webs such as 7 and 8.

The tray thus realised can be moulded from one single injection aperture situated in the mould at the location of the central part 5.

When the radial pattern of the bottom webs, such as represented and described, is not applied, but rather the well-known pattern of webs crossing each other perpendicularly, the same idea of the invention can be applied as far as the place is concerned where these webs in this case join the frame shaped bottom part 1, to wit at the location of an inwardly directed wave tip such as 6. In this case the best result is obtained when the injection apertures in the mould are arranged at the location of those places such as 7', 8' where the bottom webs reach the bottom frame.

The reference numerals in the following claims are included only in order to facilitate a quick understanding; they must in no way be construed to constitute a limitation whatsoever of the scope of the claims as defined by their wording.

Claims:

1.    Tray, adapted for packing articles, and manufactured as an injection moulding product, said tray (1) being substantially rectangular, having an apertured bottom, and having upstanding circumferential walls (3) extending obliquely outwardly and being waved, the upstanding circumferential walls being provided with an upwardly directed flange (4) aligned with the waved top edge of the wall, characterized in that the crossing webs (2) of material which, together with the frame shaped part (1) at the circumference, constitute the bottom, end up in said frame-shaped part substantially opposite inwardly directed tips (6) of the waves of the wavy circumferential wall (3).

2.    Tray, according to claim 1, characterized in that the webs of material in the bottom consist of a plurality of webs (2, 7, 8, 10, 11) extending radially outwardly from a central part (5), ending in the frame shaped part (1) substantially opposite inwardly directed tips (6) of the waves of the wavy circumferential wall (3), as well as of a few webs (9) ending in the corners, the radially extending webs being interconnected by circular webs (14-18) ending also, as far as they reach the frame shaped part, substantially opposite inwardly directed tips of the waves of the wavy circumferential wall.

3.    Method of manufacturing, as an injection moulding product, a tray according to claim 1, characterized in that the injecting is being done in the bottom substantially at the locations (e.g.

7', 8') where the bottom webs (e.g. 7,8) are connected with the frame shaped bottom part (1).

4.    Mould for manufacturing, as an injection moulding product, a tray according to claim 1, in the manner according to claim 3, characterized in that the mould is provided with injection apertures substantially at the locations where the cavities destined for the bottom webs join the cavity destined for the frame shaped bottom part, substantially opposite locations where the inwardly directed tips of the waves for the wavy circumferential wall are situated.

5.    Method of manufacturing, as an injection moulding product, a tray according to claim 2, characterized in that the injecting is being done at the location of the central part (5) where the radially outwardly extending webs meet.

6.    Mould for manufacturing, as an injection moulding product, a tray according to claim 2, in the manner according to claim 5, characterized in that the mould is provided with an injection aperture substantially in the centre of the channel shaped spaces destined for the bottom elements.

- - -

0062958

European Patent
Office

**EUROPEAN SEARCH REPORT**

Application number

EP 82 20 0440

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 351 026 (VATTO) *Page 6, line 31 to page 7, line 19; figure 10* | 1 | B 65 D 71/00 B 65 D 1/34 |
| Y | US-A-3 217 962 (WEISS) *Figure 1* | 1 | |
| A | | 2 | |

| | |
|---|---|
| | TECHNICAL FIELDS SEARCHED (Int. Cl. ³) |
| | B 65 D |

The present search report has been drawn up for all claims

| Place of search | Date of completion of the search | Examiner |
|---|---|---|
| THE HAGUE | 13-07-1982 | MARTIN A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82